# EUROPEAN PATENT APPLICATION

(11) **EP 3 604 900 A1**
(43) Date of publication of application: **05.02.2020**
(21) Application number: 19177529.5
(22) Date of filing: 30.05.2019
(51) Int. Cl.: F21S 9/03, F21S 8/08, F21V 23/04, F21V 15/00, F21W 131/103, F21Y 105/10, F21Y 115/10

(54) **SOLAR-POWERED OUTDOOR LAMP**

(30) Priority: 31.07.2018 GB 201812456
(71) Applicant: Mughal, Humayun Akhter, Harlow, Essex CM18 7PN (GB)
(72) Inventor: Mughal, Humayun Akhter, Harlow, Essex CM18 7PN (GB)
(74) Representative: Sandersons

(57) **Abstract**

A solar powered outdoor lamp comprising a photovoltaic panel configured to generate electric power from sunlight, energy storage means to store the generated electric power, a light source arranged to receive power from the energy storage means to illuminate the surrounding area and a sensor arranged to detect the presence of an object on or adjacent the photovoltaic panel surface. A guard mechanism is configured automatically to move across the photovoltaic panel upon detection of an object by the sensor.

## Description

This invention relates to an outdoor lamp, such as a street light, powered by solar energy. More specifically the invention relates to an outdoor lamp which incorporates a photovoltaic panel and a guard mechanism which serves to protect the panel and thus maximise solar performance.

With increasing concerns of rapidly depleting non-renewable energy sources, there is a need to produce environmentally friendly products which rely on sustainable energy sources. Photovoltaic panels are used as a means for generating energy from the sun; such panels are frequently mounted on domestic pitched roofs to generate power for the home and can have considerable financial benefits, as compared to electricity produced from fossil fuels. Photovoltaic panels have for many years also been used as a power source for lighting systems, such as outdoor lamps, thereby creating self-sufficient light sources.

Optimum solar energy capture relies upon the ability of the photovoltaic panels to convert sunlight into electricity. Various factors affect this ability, including weather conditions and the positional relationship between the sun and the panel. An unobstructed panel surface is therefore paramount. Birds, other animals and insects resting on the surface of the panels, as well as any waste products emitted therefrom, can restrict the ability and efficiency of energy capture.

It is a principle aim of the present invention to provide an outdoor lamp which seeks to address at least some of the above-identified problems.

According to this invention, there is provided a solar powered outdoor lamp comprising: a photovoltaic panel configured to generate electric power from sunlight; energy storage means to store the generated electric power; a light source arranged to receive power from the energy storage means to illuminate the surrounding area; a sensor arranged to detect the presence of an object on or adjacent the photovoltaic panel surface; and a guard mechanism configured automatically to move across the photovoltaic panel upon detection of an object by the sensor.

Photovoltaic solar panels are good for the environment. Using only the limitless clean energy from the sun, they have the benefit of using less material and labour to install, further reducing the carbon footprint. The outdoor lamp may be a street light or any form of lighting system which is able to capture energy from the sun and may be permanently fixed in position or configured for moving to various locations, as desired.

The object may be any obstruction such as a leaf, a bird or an insect. The sensor preferably detects the presence of obstructions located within the proximity of the sensor (i.e. within the sensing area) and triggers the guard mechanism. The automatic response of the guard mechanism, initiated by the sensor, ensures that obstructions are detected almost immediately; the guard mechanism then swiftly and gently urges the obstruction away from the photovoltaic panel by moving across the panel.

Preferably, the guard mechanism is arranged to receive power from the energy storage means in order to operate. In this way, the outdoor lamp is powered exclusively by the sun, which is environmentally friendly and pollution free. This arrangement also avoids the need for cabling as well as costly, and often complicated, pipelaying or underground wiring.

Advantageously, the guard mechanism may also be configured to wipe the surface of the photovoltaic panel as it moves thereacross. In this way, the guard mechanism serves not only as a deterrent to obstructions such as birds and other wildlife but also has a cleaning function to remove any waste products, dust, dirt or other debris from the surface of the photovoltaic panel. In addition to reacting to the presence of an object, the guard mechanism may be configured to operate at specific time intervals so ensure that the surface remains clean by wiping on a regular basis.

The guard mechanism may comprise one or more blade configured for wiping the surface. The term blade should be construed as meaning a device having a surface for passing over the photovoltaic panel. The surface may be a flat edge. The mechanism may also include one or more arm in which the one or more blade is held. The material of the blade is preferably resiliently flexible for effective cleaning and should be waterproof to facilitate outdoor use. The blade may be formed from rubber, or other type of material having the required characteristics. Preferably, the blade comprises a strip of flexible bristles.

The arm of the guard mechanism is preferably arranged to extend laterally across the photovoltaic panel, or across a part thereof. The arm and blade may comprise a substantially linear strip which extends laterally across the panel. The guard mechanism may be configured for linear transitional movement across the photovoltaic panel.

Preferably the photovoltaic panel, energy storage means and light source are at least partly contained within a housing. The photovoltaic panel is preferably arranged on an upper surface of the housing, so as to be most suitably directed towards the sun, and the light source is preferably arranged on a lower surface of the housing, at a position which provides illumination to the area required. The photovoltaic panel may form all or part of the upper surface of the lamp. The housing may extend around the panel and the light source to hold them together and partially encase them. There are various shapes of outdoor lamps, and various considerations in the overall design depending on the required aesthetic appeal and desired light emitting range. The housing may be shaped for either or both functional effectiveness and appearance. The outer periphery of the photovoltaic panel may have substantially the same shape as the outer periphery of the housing. In a particularly preferred embodiment the cross section of the housing and the photovoltaic panel are generally rectangular in configuration. Preferably the housing is mounted upon a shaft (or pole). The shaft (or pole) may be elongate, for example where the outdoor lamp comprises a street light.

Preferably, the sensor is provided on the housing, adjacent the photovoltaic panel. In this way, it can detect any obstructions over the entirety of the panel surface. The sensor is preferably a motion detector arranged to sense the presence of wildlife or other moving objects. The motion detector may be an ultrasonic motion sensor. Ultrasonic motion sensors generate ultrasonic wave pulses and determine the reflection of those waves off a moving object. The ultrasonic waves can be heard by most animals, including birds and thus may serve as an additional alarm to unsettle wildlife within the immediate vicinity of the outdoor lamp.

Due to their high efficiency, the light source preferably comprises Light Emitting Diodes (LEDs). Preferably, the outdoor lamp further comprises a controller to control the energy storage means and the light source. Advantageously, the controller may be programmable so as automatically to operate within defined parameters. The controller may include one or more of a charger for the energy storage means, an LED driver and a microprocessor. In a particularly preferred arrangement, the controller is housed within a single removable module within the housing of the outdoor lamp.

Preferably the outdoor lamp further comprises wireless communication means to facilitate remote management and control of the light source. Remote wireless connectivity reduces labour maintenance costs and allows control of more than one outdoor lamp simultaneously.

The energy storage means preferably comprises a battery. The battery may be a Lithium - ion battery. Preferably the battery has a relatively high service life and is designed to operate in elevated temperatures.

In addition to the environmental and financial advantages of solar energy, the present invention improves efficiency by maximising the ability of the photovoltaic panel to obtain energy from the sun, operating automatically without effort or human intervention.

By way of example only, an embodiment of this invention will now be described in detail, reference being made to the accompanying drawings in which:-
**Figure 1** is perspective front view of the outdoor lamp according to the present invention;
**Figure 2** is a sectional view of the sensor of the outdoor lamp of Figure 1; and
**Figure 3** is a perspective view of the guard mechanism section of the outdoor lamp of Figure 1.

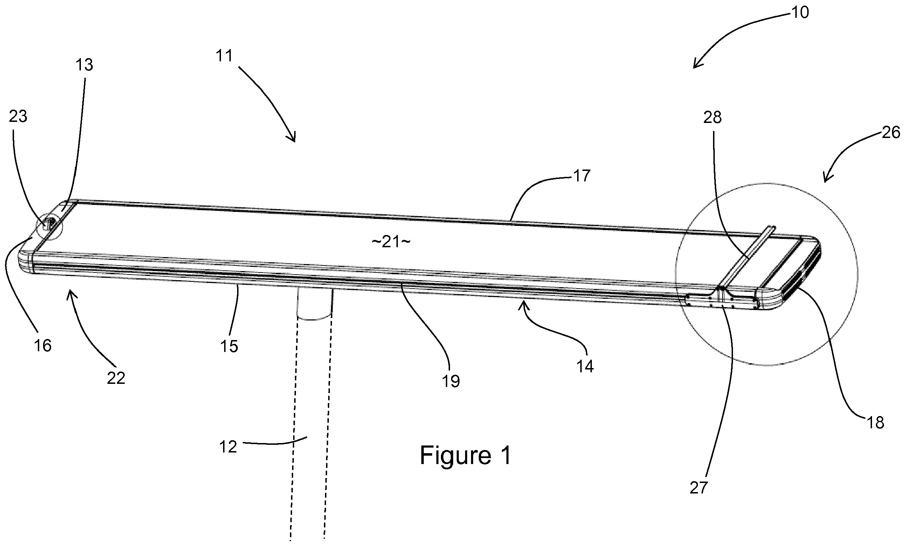

Referring initially to Figure 1, there is shown a solar powered outdoor lamp 10, comprising a housing 11 mounted upon a pole 12. The housing 11 has an elongate, generally rectangular, profile which is arranged to extend perpendicularly relative to the pole 12. The pole 12 has a free end (not shown) which is designed for securing to the ground (also not shown), by suitable fixings or by having a tapered stake configuration at the free end. The housing 11 has an upper surface 13 and, opposite thereto, a lower surface 14 from which the pole 12 is arranged to extend. Four side walls 15,16,17,18 extend between the upper surface 13 and lower surface 14. A track 19 is provided in and extends along the length of each of two of the opposed side walls 15, 17 (although only one of these is visible in the figures), as will be discussed in more detail below.

A photovoltaic solar panel 21 is mounted to the upper surface 13 of the housing 11. The upper surface 13 serves as a frame for the photovoltaic panel 21, holding the panel 21 in place. The photovoltaic panel 21 is generally rectangular in cross section and is arranged to convert solar radiation into electricity. A series of LEDs (not visible) are mounted to the lower surface 14 of the housing 11, towards a first end 22 to illuminate the surrounding area.

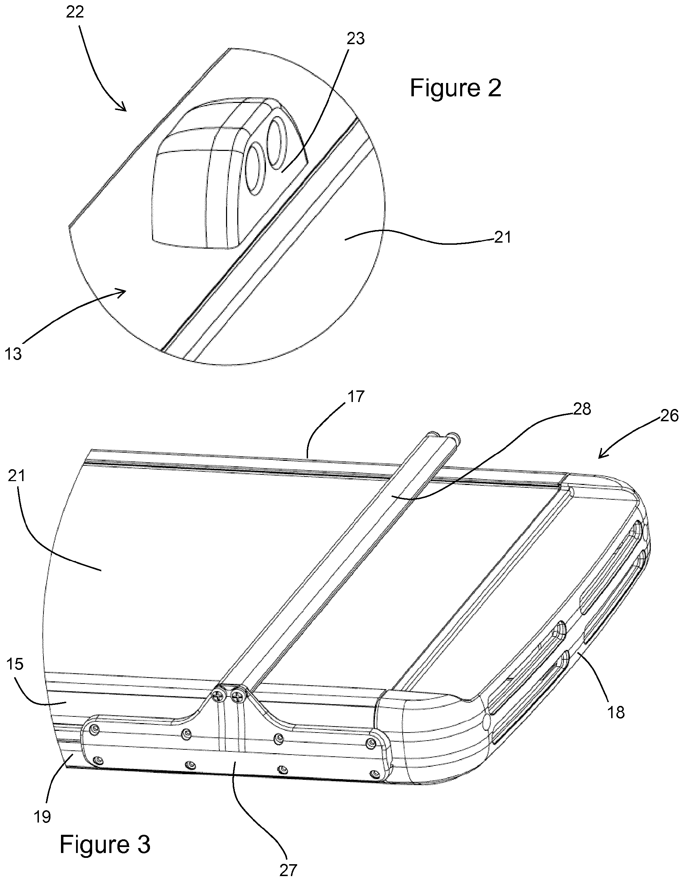

Referring now to Figures 1 and 2, a sensor 23 is mounted to the upper surface 13 of the housing 11, towards the first end 22 thereof, adjacent the photovoltaic panel 21. The location defines a sensing area, which covers the panel 21. The sensor 23 is a motion sensor configured to detect movement adjacent the photovoltaic panel 21.

Referring now to figure 3, there is shown an enlarged view of a second end 26 of the housing 11. A runner 27 is arranged to move along each track 19, provided in the two side walls 15, 17 (although only one is visible in the figures). A motor and associated componentry (not visible) are provided within the housing 11 to initiate movement of the runners 27 along their associated track 19. A guard mechanism in the form of an elongate, generally rectangular, arm 28 is held by and extends perpendicularly between the runners 27 so as to locate adjacent the photovoltaic panel surface 21. The arm 28 carries a flexible blade (not visible) which is designed to engage the photovoltaic panel surface 21 as the runners 27 move along the tracks 19.

The housing 11 also contains a battery for storing the generated electric power and a controller (neither of which are visible). The controller includes a charger for the energy storage means, an LED driver and a microprocessor. The microprocessor is programmed to drive movement of the runners 27 along the tracks 19 at pre-defined time intervals to ensure that the blade passes over the panel surface 21 in order to effect a cleaning action. Additionally, movement detected by the sensor 23 triggers the microprocessor to drive the runners 27 and thus movement of the arm 28 across the panel 21. In this way, the arm 28 can serve as a deterrent for any objects adjacent the photovoltaic panel 21.

## Claims

1. A solar powered outdoor lamp comprising: a photovoltaic panel configured to generate electric power from sunlight; energy storage means to store the generated electric power; a light source arranged to receive power from the energy storage means to illuminate the surrounding area; a sensor arranged to detect the presence of an object on or adjacent the photovoltaic panel surface; and a guard mechanism configured automatically to move across the photovoltaic panel upon detection of an object by the sensor.

2. A solar powered outdoor lamp as claimed in claim 1, wherein the guard mechanism is configured to wipe the surface of the photovoltaic panel as it moves thereacross.

3. A solar powered outdoor lamp as claimed in claim 2, wherein the guard mechanism comprises a blade configured for wiping the surface and a blade arm in which the blade is held.

4. A solar powered outdoor lamp as claimed in claim 3, wherein the blade is formed from a strip of flexible bristles.

5. A solar powered outdoor lamp as claimed in any of the preceding claims wherein the guard mechanism comprises a substantially rectangular arm.

6. A solar powered outdoor lamp as claimed in any of claims 1 to 5, wherein the sensor is a motion detector.

7. A solar powered outdoor lamp as claimed in claim 6, wherein the sensor is an ultrasonic motion sensor.

8. A solar powered outdoor lamp as claimed in any of the preceding claims wherein the photovoltaic panel surface is generally rectangular in configuration.

9. A solar powered outdoor lamp as claimed in claim 8 wherein the guard mechanism extends laterally across the photovoltaic panel surface.

10. A solar powered outdoor lamp as claimed in any of the preceding claims, wherein the guard mechanism is configured for linear transitional movement across the photovoltaic panel.

11. A solar powered outdoor lamp as claimed in any of the preceding claims wherein the photovoltaic panel, energy storage means and light source are contained within a housing.

12. A solar powered outdoor lamp as claimed in claim 11, wherein the sensor is provided on the housing adjacent the photovoltaic panel.

13. A solar powered outdoor lamp as claimed in any of the proceeding claims, wherein the light source comprises Light Emitting Diodes (LEDs).

14. A solar powered outdoor lamp as claimed in any of the preceding claims further comprising a programmable controller configured to control operation of the energy storage means and light source.

15. A solar powered outdoor lamp as claimed in any of the preceding claims, further comprising wireless communication means to facilitate remote management and control of the light source.
